# EUROPÄISCHE PATENTANMELDUNG

(11) **EP 4 053 430 A1**
(43) Veröffentlichungstag der Anmeldung: **07.09.2022**
(21) Anmeldenummer: 21160844.3
(22) Anmeldetag: 04.03.2021
(51) Int. Cl.: F16H 48/05, B60K 1/00, F16H 48/22, F16H 48/10

(54) **ANTRIEBSVORRICHTUNG UND KRAFTFAHRZEUG**

(71) Anmelder: Pi3 GmbH, 74864 Fahrenbach (DE)
(72) Erfinder: Pollak, Burkhard, 74864 Fahrenbach (DE)
(74) Vertreter: Ege Lee & Roider Patentanwälte

(57) **Zusammenfassung**

Antriebsvorrichtung (100) für ein Kraftfahrzeug, die Antriebsvorrichtung (100) aufweisend einen Antriebsmotor (102), einen ersten Abtrieb (112), einen zweiten Abtrieb (114), ein leistungsverzweigendes erstes Getriebe (104,) mit einem dem Antriebsmotor (102) zugeordneten Getriebeeingang, einem dem ersten Abtrieb (112) zugeordneten Getriebeausgang und einer Koppelschnittstelle und ein leistungsverzweigendes zweites Getriebe (106) mit einem dem Antriebsmotor (102) zugeordneten Getriebeeingang, einem dem zweiten Abtrieb (114) zugeordneten Getriebeausgang und einer Koppelschnittstelle, wobei die Koppelschnittstelle des ersten Getriebes (104) und die Koppelschnittstelle des zweiten Getriebes (106) miteinander zum Drehzahlausgleich gekoppelt sind, und Kraftfahrzeug mit einer derartigen Antriebsvorrichtung (100).

## Beschreibung

Die Erfindung betrifft eine Antriebsvorrichtung für ein Kraftfahrzeug, die Antriebsvorrichtung aufweisend einen Antriebsmotor, einen ersten Abtrieb, einen zweiten Abtrieb, ein mit dem Antriebsmotor gekoppeltes und dem ersten Abtrieb zugeordnetes leistungsverzweigendes erstes Getriebe und ein mit dem Antriebsmotor gekoppeltes und dem zweiten Abtrieb zugeordnetes leistungsverzweigendes zweites Getriebe. Außerdem betrifft die Erfindung ein Kraftfahrzeug.

Das Dokument DE 10 2011 102 749 A1 betrifft eine Getriebeanordnung für ein Kraftfahrzeug mit einem ein Gehäuse, einer elektrischen Maschine sowie einer Getriebeeinrichtung. Die elektrische Maschine weist einen gehäusefesten Stator und einen relativ zu dem Stator drehbar gelagerten Rotor auf. Die Getriebeeinrichtung weist ein erstes stirnverzahntes Planetengetriebe und ein zweites stirnverzahntes Planetengetriebe auf. Das erste stirnverzahnte Planetengetriebe ist mittels seiner Eingangswelle mit dem Rotor und mittels seiner Ausgangswelle mit einer ersten Achsflanschwelle verbunden. Das zweite stirnverzahnte Planetengetriebe ist mittels seiner Eingangswelle mit einer Koppelwelle des ersten Planetengetriebes und mittels seiner Ausgangswelle mit einer zweiten Achsflanschwelle verbunden. Das erste Planetengetriebe weist ein erstes Sonnenrad, ein Hohlrad und einen Steg auf. Das erste Sonnenrad bildet eine koaxial zu dem Rotor angeordnete und mit diesem verbundene Eingangswelle des ersten Planetengetriebes. Das Hohlrad bildet eine Koppelwelle des ersten Planetengetriebes. Der Steg bildet eine koaxial zu dem Rotor und koaxial zu der ersten Achsflanschwelle angeordnete und mit dieser verbundene Ausgangswelle und trägt einen einfachen Satz drehbar gelagerter erster Planetenräder, die einerseits mit dem ersten Sonnenrad und andererseits mit dem ersten Hohlrad kämmen. Das zweite Planetengetriebe weist ein zweites Sonnenrad und einen zweiten Steg auf. Der zweite Steg ist gehäusefest und trägt einen einfachen Satz drehbar gelagerter zweiter Planetenräder, die mit dem zweiten Sonnenrad kämmen. Um einen Achsantrieb mit verbessertem Wirkungsgrad und reduziertem Bauraumbedarf zu ermöglichen, ist das zweite Planetengetriebe als einfaches Minus-Planetengetriebe mit einem zweiten Hohlrad ausgebildet, dessen zweite Planetenräder zusätzlich mit dem zweiten Hohlrad kämmen.

Das Dokument DE 10 2014 101 713 A1 betrifft eine elektrische Portalachse zum elektrischen Antrieb eines Kraftfahrzeugs. Die Portalachse weist zwei Stirnradstufen zum Antrieb von zwei Rädern der Achse auf. Um eine zweistufig schaltbare elektrische Portalachse zum elektrischen Antrieb eines Kraftfahrzeuges zu schaffen, weist die Portalachse eine einzige Elektromaschine, nachgeordnet ein schaltbares Getriebe mit Freilauf und ein Differential und ein Gehäuse auf. Das schaltbare Getriebe ist als Planetengetriebe ausgebildet und weist zum Schalten zweier Gangstufen der Portalachse ein Schaltmittel auf. In einer ersten Gangstufe sind ein Hohlrad des Getriebes und ein gehäusefester Kupplungskörper verbunden und eine Kupplung zwischen Hohlrad und einem Planetenträger des Getriebes ist geöffnet. In einer zweiten Gangstufe sind das Hohlrad und der gehäusefeste Kupplungskörper getrennt und die Kupplung ist geschlossen.

Das Dokument DE 10 2017 111 036 A1 betrifft eine Antriebsvorrichtung für ein Kraftfahrzeug. Die Antriebsvorrichtung weist eine Antriebsmaschine und eine Getriebevorrichtung auf. Die Getriebevorrichtung weist einen ersten und zweiten Planetenradsatz mit jeweils mehreren Planetenrädern sowie ein Stirnraddifferential mit jeweils mehreren Stirnrädern auf. Das Stirnraddifferential ist dazu vorgesehen, eine Antriebsleistung der Antriebsmaschine auf eine erste und zweite mit dem Stirnraddifferential wirkverbundene Abtriebswelle zu verteilen. Die Planetenräder des ersten Planetenradsatzes sind drehbar an einem ersten Planetenträger angeordnet sind und mit einem ersten Sonnenrad und einem ersten Hohlrad im Zahneingriff stehen, wobei das erste Sonnenrad drehfest mit einer Antriebswelle verbunden ist. Die Planetenräder des zweiten Planetenradsatzes sind drehbar an einem zweiten Planetenträger angeordnet und mit einem zweiten Sonnenrad und einem zweiten Hohlrad im Zahneingriff stehen, wobei das zweite Sonnenrad drehfest mit dem ersten Planetenträger verbunden ist, und wobei der erste Planetenradsatz radial innerhalb des zweiten Planetenradsatzes verschachtelt ist. Die jeweiligen Stirnräder des Stirnraddifferentials sind drehbar an einem gemeinsamen Differentialkorb gelagert, wobei die Stirnräder eines ersten Stirnradsatzes mit einer Verzahnung an der ersten Abtriebswelle im Zahneingriff stehen, wobei ferner die Stirnräder eines zweiten Stirnradsatzes mit einer Verzahnung an der zweiten Abtriebswelle im Zahneingriff stehen, und wobei die Stirnräder beider Stirnradsätze paarweise miteinander im Zahneingriff stehen.

Das Dokument DE 10 2019 102 940 A1 betrifft eine Kraftübertragungskomponente mit einem Gehäuse. Die Kraftübertragungskomponente umfasst einen Planetenträger, der derart im Gehäuse angeordnet ist, dass er relativ zum Gehäuse um eine Mittelachse drehbar ist, wobei der Planetenträger einen Trägerkörper und Sätze erster Zapfen, zweiter Zapfen und dritter Zapfen aufweist, wobei jeder der ersten Zapfen um den Trägerkörper herum angeordnet ist, jeder der zweiten Zapfen um den Trägerkörper herum angeordnet ist, jeder der dritten Zapfen um den Trägerkörper herum angeordnet ist; ein Eingangssonnenrad, das derart im Trägerkörper angeordnet ist, dass es um die Mittelachse relativ zum Planetenträger drehbar ist; ein erstes Ausgangssonnenrad, das derart im Trägerkörper angeordnet ist, dass es um die Mittelachse relativ zum Planetenträger drehbar ist. Außerdem umfasst die Kraftübertragungskomponente ein zweites Ausgangssonnenrad, das im Trägerkörper derart angeordnet ist, dass es um die Mittelachse relativ zum Planetenträger drehbar ist. Außerdem umfasst die Kraftübertragungskomponente ein Hohlrad, das drehfest mit dem Gehäuse gekoppelt ist. Außerdem umfasst die Kraftübertragungskomponente mehrere mehrteilige Umlaufräder, wobei jedes der mehrteiligen Umlaufräder im Trägerkörper aufgenommen und auf einem zugeordneten der ersten Zapfen drehbar angeordnet ist, wobei jedes der mehrteiligen Umlaufräder ein erstes Planetenrad, das mit dem Eingangssonnenrad kämmend in Eingriff steht, und ein zweites Planetenrad, das drehfest mit dem ersten Planetenrad gekoppelt ist und mit dem Hohlrad kämmend in Eingriff steht, aufweist. Außerdem umfasst die Kraftübertragungskomponente mehrere dritte Planetenräder, wobei jedes der dritten Planetenräder auf einem zugeordneten der zweiten Zapfen drehbar angeordnet ist und mit dem ersten Ausgangssonnenrad kämmend in Eingriff steht. Außerdem umfasst die Kraftübertragungskomponente mehrere vierte Planetenräder, wobei jedes der vierten Planetenräder auf einem zugeordneten der dritten Zapfen drehbar angeordnet ist und mit dem zweiten Ausgangssonnenrad und einem entsprechenden der dritten Planetenräder kämmend in Eingriff steht.

Der Erfindung liegt die Aufgabe zugrunde, eine eingangs genannte Antriebsvorrichtung strukturell und/oder funktionell zu verbessern. Außerdem liegt der Erfindung die Aufgabe zugrunde, ein eingangs genanntes Kraftfahrzeug strukturell und/oder funktionell zu verbessern.

Die Aufgabe wird gelöst mit einer Antriebsvorrichtung mit den Merkmalen des Anspruchs 1. Außerdem wird die Aufgabe gelöst mit einem Kraftfahrzeug mit den Merkmalen des Anspruchs 10. Vorteilhafte Ausführungen und/oder Weiterbildungen sind Gegenstand der abhängigen Ansprüche.

Die Antriebsvorrichtung kann zur Anordnung in einem Antriebsstrang dienen. Die Antriebsvorrichtung kann einen Antrieb und zwei Abtriebe aufweisen. Die Antriebsvorrichtung kann als Differentialgetriebe, Ausgleichsgetriebe, Verteilergetriebe und/oder Achsgetriebe dienen. Die Antriebsvorrichtung kann ein Gehäuse aufweisen. Der Antriebsmotor, das leistungsverzweigende erste Getriebe und das leistungsverzweigende zweite Getriebe können gemeinsam in dem Gehäuse angeordnet sein. Der Antriebsmotor, das erste Getriebe und das zweite Getriebe können zusätzlich strukturell und/oder funktionell miteinander verbunden sein. Insofern kann die Antriebsvorrichtung auch als integrierte Antriebsvorrichtung bezeichnet werden. Der erste Abtrieb kann mithilfe einer ersten Ausgangswelle gebildet sein. Der zweite Abtrieb kann mithilfe einer zweiten Ausgangswelle gebildet sein. Die erste Ausgangswelle und die zweite Ausgangswelle können/kann, insbesondere an dem Gehäuse, drehbar gelagert sein. Das erste Getriebe kann zwischen dem Getriebeeingang und dem Getriebeausgang einen ersten Leistungszweig und zwischen dem Getriebeeingang und dem Getriebeausgang einerseits und der Koppelschnittstelle andererseits einen zweiten Leistungszweig aufweisen. Das erste Getriebe kann zwischen dem Antriebsmotor und den ersten Abtrieb, zwischen dem Antriebsmotor und der Koppelung und/oder zwischen dem Abtrieb und der Koppelung wirksam sein. Das zweite Getriebe kann zwischen dem Getriebeeingang und dem Getriebeausgang einen ersten Leistungszweig und zwischen dem Getriebeeingang und dem Getriebeausgang einerseits und der Koppelschnittstelle andererseits einen zweiten Leistungszweig aufweisen. Das zweite Getriebe kann zwischen dem Antriebsmotor und dem zweiten Abtrieb, zwischen dem Antriebsmotor und der Koppelung und/oder zwischen dem Abtrieb und der Koppelung wirksam sein.

Soweit nicht anders angegeben oder es sich aus dem Zusammenhang nicht anders ergibt, beziehen sich die Angaben "axial", "radial" und "in Umfangsrichtung" auf eine Erstreckungsrichtung der Hauptachse der Antriebsvorrichtung. "Axial" entspricht dann einer Erstreckungsrichtung der Hauptachse der Antriebsvorrichtung. "Radial" ist dann eine zur Erstreckungsrichtung der Hauptachse der Antriebsvorrichtung senkrechte und sich mit der Hauptachse der Antriebsvorrichtung schneidende Richtung. "In Umfangsrichtung" entspricht dann einer Kreisbogenrichtung um die Hauptachse der Antriebsvorrichtung.

Der Antriebsmotor kann als Fahrantriebsmotor dienen. Der Antriebsmotor kann als primärer oder sekundärer Antriebsmotor dienen. Der Antriebsmotor kann eine elektrische Antriebsmaschine sein. Die elektrische Antriebsmaschine kann als Motor und/oder als Generator betreibbar sein. Der Antriebsmotor kann zwischen dem ersten Getriebe und dem zweiten Getriebe angeordnet sein. Der Antriebsmotor kann einen Stator und einen Rotor aufweisen. Der Stator kann gehäusefest sein. Der Antriebsmotor kann eine Motorwelle aufweisen. Die Motorwelle kann mit dem Rotor drehfest verbunden sein. Der Rotor und/oder die Motorwelle können/kann, insbesondere an dem Gehäuse, drehbar gelagert sein. Die Motorwelle kann ein erstes Ende, das dem ersten Getriebe zugeordnet ist, und ein zweites Ende, das dem zweiten Getriebe zugeordnet ist, aufweisen.

Der Antriebsmotor kann eine Motordrehachse aufweisen. Das erste Getriebe und das zweite Getriebe können jeweils eine Getriebehauptachse aufweisen. Die Motordrehachse und die Getriebehauptachsen können zueinander koaxial angeordnet sein. Die Motordrehachse und die Getriebehauptachsen können eine Hauptachse der Antriebsvorrichtung bilden. Der Antriebsmotor kann zentral angeordnet sein. Das erste Getriebe und das zweite Getriebe können zum Antriebsmotor spiegelsymmetrisch angeordnet sein. Der Antriebsmotor kann mittig angeordnet sein. Das erste Getriebe und das zweite Getriebe können beidseits des Antriebsmotors angeordnet sein.

Das leistungsverzweigende erste Getriebe und das leistungsverzweigende zweite Getriebe können gleiche Übersetzungen aufweisen. Das erste Getriebe und das zweite Getriebe können jeweils rotationssymmetrisch aufgebaut sein. Das erste Getriebe und das zweite Getriebe können zueinander spiegelsymmetrisch aufgebaut sein. Das erste Getriebe und das zweite Getriebe können jeweils als Planetengetriebe ausgeführt sein. Das erste Getriebe und das zweite Getriebe können jeweils ein motorseitiges erstes Sonnenrad, ein ausgangsseitiges zweites Sonnenrad und zwischen dem ersten Sonnenrad und dem zweiten Sonnenrad wirksame, an einem Planetenträger angeordnete Planetenräder aufweisen. Die ersten Sonnenräder können jeweils einen Getriebeeingang bilden. Die zweiten Sonnenräder können jeweils einen Getriebeausgang bilden. Die ersten Planetenträger können jeweils eine Koppelschnittstelle bilden. Das erste Sonnenrad des ersten Getriebes kann an dem ersten Ende der Motorwelle angeordnet sein. Das erste Sonnenrad des zweiten Getriebes kann an dem zweiten Ende der Motorwelle angeordnet sein. Die ersten Sonnenräder können jeweils mit der Motorwelle drehfest verbunden sein. Das zweite Sonnenrad des ersten Getriebes kann an der ersten Ausgangswelle angeordnet sein. Das zweite Sonnenrad des ersten Getriebes kann mit der ersten Ausgangswelle drehfest verbunden sein. Das zweite Sonnenrad des zweiten Getriebes kann an der zweiten Ausgangswelle angeordnet sein. Das zweite Sonnenrad des zweiten Getriebes kann mit der zweiten Ausgangswelle drehfest verbunden sein. Die Getriebe können jeweils wenigstens ein dem ersten Sonnenrad zugeordnetes erstes Planetenrad und wenigstens ein dem zweiten Sonnenrad zugeordnetes zweites Planetenrad aufweisen. Das wenigstens eine erste Planetenrad und das erste Sonnenrad können in einer gemeinsamen Ebene angeordnet sein. Das wenigstens eine zweite Planetenrad und das zweite Sonnenrad können in einer gemeinsamen Ebene angeordnet sein. Das wenigstens eine erste Planetenrad und das wenigstens eine zweite Planetenrad können ein miteinander drehfest verbundenes Planetenradpaar bilden. Ein Planetenradpaar kann an einem Planetenträger gemeinsam drehbar gelagert sein. Das erste Getriebe und das zweite Getriebe können jeweils wenigstens ein Planetenpaar, insbesondere zwei oder drei Planetenpaare, aufweisen. Die Planetenpaare können bezüglich der Hauptachsen der Getriebe in Umfangsrichtung, insbesondere gleichmäßig, verteilt angeordnet sein. Ein erstes Sonnenrad und ein erstes Planetenrad können jeweils eine erste Übersetzungsstufe aufweisen. Ein zweites Sonnenrad und ein zweites Planetenrad können jeweils eine zweite Übersetzungsstufe aufweisen. Die Planetenträger können jeweils eine Verzahnung aufweisen. Die Verzahnungen der Planetenträger können zum Koppeln der Getriebe miteinander dienen. Der Planetenträger eines Getriebes kann axial zwischen dem ersten Sonnenrad und dem zweiten Sonnenrad dieses Getriebes angeordnet sein. Der Planetenträger eines Getriebes kann ringartig oder scheibenartig ausgeführt sein. Der Planetenträger eines Getriebes kann axial außenseitig des wenigstens einen ersten Planetenrads und axial außenseitig des wenigstens einen zweiten Planetenrads dieses Getriebes angeordnet sein und das wenigstens eine erste Planetenrad und das wenigstens eine zweite Planetenenrad radial außenseitig umgreifen. Der Planetenträger eines Getriebes kann axial zwischen dem ersten Sonnenrad und dem zweiten Sonnenrad und axial außenseitig des wenigstens einen ersten Planetenrads dieses Getriebes angeordnet sein und das wenigsten eine erste Planetenrad radial außenseitig umgreifen. Der Planetenträger eines Getriebes kann axial zwischen dem ersten Sonnenrad und dem zweiten Sonnenrad und axial außenseitig des wenigstens einen zweiten Planetenrads dieses Getriebes angeordnet sein und das wenigstens eine zweite Planetenrad radial außenseitig umgreifen. Der Planetenträger eines Getriebes kann käfigartig oder hohlzylinderartig ausgeführt sein. Die Planetenträger können jeweils an der Motorwelle, an einer Ausgangswelle und/oder an dem Gehäuse drehbar gelagert sein.

Das erste Getriebe, insbesondere die Koppelschnittstelle des ersten Getriebes, und das zweite Getriebe, insbesondere die Koppelschnittstelle des zweiten Getriebes, können miteinander gekoppelt sein, um eine Drehzahldifferenz zwischen der ersten Ausgangswelle und der zweiten Ausgangswelle zu ermöglichen. Das erste Getriebe, insbesondere die Koppelschnittstelle des ersten Getriebes, und das zweite Getriebe, insbesondere die Koppelschnittstelle des zweiten Getriebes, können miteinander ohne betragsmäßige Übersetzungsänderung gekoppelt sein. Das erste Getriebe, insbesondere die Koppelschnittstelle des ersten Getriebes, und das zweite Getriebe, insbesondere die Koppelschnittstelle des zweiten Getriebes, können miteinander drehrichtungsumkehrend gekoppelt sein. Das erste Getriebe, insbesondere die Koppelschnittstelle des ersten Getriebes, und das zweite Getriebe, die Koppelschnittstelle des zweiten Getriebes, können miteinander mit einer Übersetzung i=-1 gekoppelt sein.

Die Koppelschnittstelle des ersten Getriebes und die Koppelschnittstelle des zweiten Getriebes können miteinander mithilfe wenigstens eines Koppelelements gekoppelt sein. Das wenigstens eine Koppelelement kann, insbesondere an dem Gehäuse, drehbar gelagert sein. Die Koppelschnittstelle des ersten Getriebes und die Koppelschnittstelle des zweiten Getriebes können miteinander mithilfe mehrerer Koppelelemente gekoppelt sein. Die Koppelelemente können zusammenwirkend gruppiert sein. Die Koppelelementgruppen können bezüglich der Hauptachsen der Getriebe in Umfangsrichtung, insbesondere gleichmäßig, verteilt angeordnet sein. die Koppelschnittstelle des ersten Getriebes und die Koppelschnittstelle des zweiten Getriebes können miteinander mithilfe eines ersten Koppelelements und eines zweiten Koppelelements gekoppelt sein. Das erste Koppelelement kann zwischen dem ersten Getriebe und dem zweiten Koppelelement wirksam sein. Das zweite Koppelelement kann zwischen dem ersten Koppelelement und dem zweiten Getriebe wirksam sein. Das wenigstens eine Koppelelement, insbesondere das erste Koppelelement und/oder das zweite Koppelelement, können/kann als Koppelwelle, Zahnrad, Stirnrad, Hohlrad, Kettenrad oder Kette ausgeführt sein. Ein Koppelelement kann zur Drehrichtungsumkehr dienen. Ein zur Drehrichtungsumkehr dienendes Koppelelement kann als Zahnrad ausgeführt sein und/oder als Rücklaufrad bezeichnet werden. Eine Koppelwelle kann eine Welle mit Koppelverzahnungen sein. Das erste Koppelelement und das zweite Koppelelement können als Koppelwellen mit gleichen oder unterschiedlichen Längen ausgeführt sein. Das erste Koppelelement und das zweite Koppelelement können als Koppelwellen mit gleichen oder unterschiedlichen Koppelverzahnungsbreiten ausgeführt sein. Das erste Koppelelement kann als Zahnrad und das zweite Koppelelement kann als Koppelwelle ausgeführt sein. Das Koppelelement kann als zu den Hauptachsen der Getriebe parallele oder zu den Hauptachsen der Getriebe schräge Koppelwelle ausgeführt sein. Das erste Koppelelement kann als Kette und das zweite Koppelelement kann als Koppelwelle mit Kettenrad ausgeführt sein.

Das erste Getriebe, das zweite Getriebe und/oder wenigstens ein Koppelelement können/kann eine Bremse aufweisen. Die Bremse kann strukturell und/oder funktionell integriert sein. Die Bremse kann auf einen Drehfreiheitsgrad der Koppelung zwischen den Getrieben wirken. Die Bremse kann zum Reduzieren der Drehzahl der Koppelung und damit einer Drehzahldifferenz zwischen der ersten Ausgangswelle und der zweiten Ausgangswelle dienen. Die Bremse kann zum Sperren eines Drehzahlausgleichs dienen. Die Bremse kann als Differentialsperre dienen. Die Bremse kann zum Bremsen eines Planetenträgers und/oder eines Koppelelements dienen. Die Bremse kann manuell und/oder automatisiert kontrollierbar sein. Die Bremse kann regelungstechnisch und/oder steuerungstechnisch kontrollierbar sein. Die Bremse kann unter Berücksichtigung wenigstens einer Eingangsgröße, wie Drehzahl oder Drehzahldifferenz, kontrollierbar sein. Die Bremse kann kraftschlüssig, insbesondere reibschlüssig, oder formschlüssig wirksam sein. Die Bremse kann mithilfe fliehkraftabhängig oder differenzdrehzahlabhängig kontrollierbar sein. Die Bremse kann als Fliehkraftkupplung oder mit dem Wirkprinzip einer Visco-Kupplung ausgeführt sein.

Die Koppelung zwischen dem ersten Getriebe und dem zweiten Getriebe kann, beispielsweise zur Entkoppelung der Antriebsmaschine von den Antriebsrädern, trennbar sein. Die Koppelung zwischen dem ersten Getriebe und dem zweiten Getriebe kann ein Schaltelement aufweisen. Das Schaltelement kann zwischen einer geschlossenen Schaltstellung und einer geöffneten Schaltstellung schaltbar sein. Das Schaltelement kann manuell und/oder automatisiert kontrollierbar sein. Das Schaltelement kann regelungstechnisch und/oder steuerungstechnisch kontrollierbar sein. Das Schaltelement kann unter Berücksichtigung wenigstens einer Eingangsgröße kontrollierbar sein. Das Schaltelement kann kraftschlüssig, insbesondere reibschlüssig, oder formschlüssig wirksam sein. Das Schaltelement kann als Reibungskupplung oder als Klauenkupplung ausgeführt sein. Das Schaltelement kann als axiale verschiebbares Zahnrad ausgeführt sein. Die Bremse und das Schaltelement können strukturell und/oder funktionell miteinander verbunden sein.

Das Kraftfahrzeug kann ein Hybridelektrokraftfahrzeug oder ein Elektrokraftfahrzeug sein. Das Kraftfahrzeug kann einen von dem Antriebsmotor der Antriebsvorrichtung gesonderten Antriebsmotor aufweisen. Der Antriebsmotor des Kraftfahrzeugs kann eine Brennkraftmaschine oder eine elektrische Maschine sein. Der Antrieb der Antriebsvorrichtung kann mithilfe des Antriebsmotors des Kraftfahrzeugs antreibbar sein. Wenn das Kraftfahrzeug einen gesonderten Antriebsmotor aufweist, kann der Antriebsmotor der Antriebsvorrichtung als sekundärer Antriebsmotor dienen. Das Kraftfahrzeug kann einen Antriebsstrang aufweisen. Die Antriebsvorrichtung kann in dem Antriebsstrang angeordnet sein. Der Antriebsstrang kann durch die Antriebsvorrichtung gebildet werden. Die Antriebsvorrichtung kann als Achsgetriebe dienen. Das Kraftfahrzeug kann wenigstens ein erstes antreibbares Fahrzeugrad und wenigstens ein zweites antreibbares Fahrzeugrad aufweisen. Das erste Fahrzeugrad kann mithilfe der ersten Ausgangswelle antreibbar sein. Das zweite Fahrzeugrad kann mithilfe der zweiten Ausgangswelle antreibbar sein.

Zusammenfassend und mit anderen Worten dargestellt ergibt sich somit durch die Erfindung unter anderem eine Integrierte Antriebsachse. Die Integrierte Antriebsachse kann einen Antriebsmotor, insbesondere eine elektrische Maschine, aufweisen, deren Rotor auf beiden Seiten je ein Planetengetriebe antreibt, wobei diese als reine Stirnradplanetengetriebe ausgeführt sein können. Die beiden Planetenträger rechts und links des Antriebsmotors können durch eine mechanische Koppelung, beispielsweise durch Verzahnungen und Wellen realisiert, miteinander wirkverbunden sein, sodass ihre Drehbewegungen unterschiedliche Richtungen aufweisen. Planetenträger können jeweils eine ganzzahlige Anzahl von Zahnradpaaren tragen, die durch eine Achse verbunden sind, welche im Planetenträger drehbar gelagert ist. Die zur Seite des Antriebsmotors hin angeordneten Planeten können mit den Sonnenrädern des Rotors bzw. der Rotor- oder Eingangswelle der Antriebseinheit kämmen. Die anderen Planeten können mit den Sonnenrädern auf den beiderseitigen Abtriebswellen kämmen, die über die Seitenwellen mit den Antriebsrädern verbunden sind.

Mit der Erfindung wird ein Bauraumbedarf reduziert. Ein Drehzahlausgleich wird ermöglich. Ein Aufwand, wie Herstellungsaufwand, wird reduziert. Lokale Belastungen können reduziert werden. Eine Differentialsperre kann bereitgestellt werden. Ein Wirkungsgrad kann erhöht werden. Ein Komfort, beispielsweise ein Akustikverhalten, kann verbessert werden.

Nachfolgend werden Ausführungsbeispiele der Erfindung unter Bezugnahme auf Figuren näher beschrieben, dabei zeigen schematisch und beispielhaft:
- Fig. 1: eine integrierte Antriebsvorrichtung mit einem Antriebsmotor, zwei leistungsverzweigenden Getrieben und einer Koppelung,
- Fig. 2: eine integrierte Antriebsvorrichtung mit einem als Elektromotor ausgeführten Antriebsmotor, zwei als Planetengetriebe ausgeführten Getrieben und einer mithilfe von zwei Koppelwellen gebildeten Koppelung im Halbschnitt entlang einer Hauptachse,
- Fig. 3: eine integrierte Antriebsvorrichtung mit einem als Elektromotor ausgeführten Antriebsmotor, zwei als Planetengetriebe ausgeführten Getrieben und einer mithilfe von zwei Koppelwellen gebildeten Koppelung in seitlicher Ansicht,
- Fig. 4: eine integrierte Antriebsvorrichtung mit einem als Elektromotor ausgeführten Antriebsmotor, zwei als Planetengetriebe ausgeführten Getrieben und einer mithilfe einer langen Koppelwelle und einem breiten Rücklaufrad gebildeten Koppelung im Halbschnitt entlang einer Hauptachse,
- Fig. 5: eine integrierte Antriebsvorrichtung mit einem als Elektromotor ausgeführten Antriebsmotor, zwei als Planetengetriebe ausgeführten Getrieben und einer mithilfe einer langen Koppelwelle und einem kurzen Rücklaufrad gebildeten Koppelung im Halbschnitt entlang einer Hauptachse,
- Fig. 6: eine integrierte Antriebsvorrichtung mit einem als Elektromotor ausgeführten Antriebsmotor, zwei als Planetengetriebe ausgeführten Getrieben, einer mithilfe von zwei Koppelwellen gebildeten Koppelung und einer Bremse im Halbschnitt entlang einer Hauptachse,
- Fig. 7: eine integrierte Antriebsvorrichtung mit einem als Elektromotor ausgeführten Antriebsmotor, zwei als Planetengetriebe ausgeführten Getrieben, einer mithilfe von zwei Koppelwellen gebildeten Koppelung und einem Schaltelement im Halbschnitt entlang einer Hauptachse und
- Fig. 8: eine integrierte Antriebsvorrichtung mit einem als Elektromotor ausgeführten Antriebsmotor, zwei als Planetengetriebe ausgeführten Getrieben, einer Koppelung und einem verschiebbaren Rücklaufrad als Koppelelement und Schaltelement im Halbschnitt entlang einer Hauptachse.

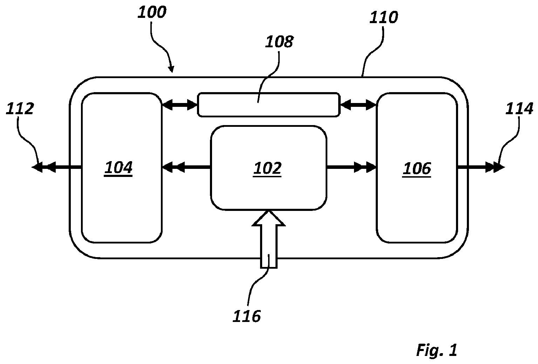

Fig. 1 zeigt eine integrierte Antriebsvorrichtung 100 mit einem Antriebsmotor 102, zwei Getrieben 104, 106 einer Koppelung 108 und einem Gehäuse 110. Die Antriebsvorrichtung 100 dient als Achsdifferentialgetriebe zur Anordnung in einem Antriebsstrang eines Kraftfahrzeugs und weist eine ersten Abtrieb 112, der zu einer ersten antreibbaren Fahrzeugrad einer Fahrzeugachse führt, und einen zweiten Abtrieb 114, der zu einer zweiten antreibbaren Fahrzeugrad der Fahrzeugachse führt, auf. Der Antriebsmotor 102 dient zum Wandeln von Energie 116 in mechanische Leistung. Das erste Getriebe 104 ist zwischen dem Antriebsmotor 102 und dem ersten Abtrieb 112 wirksam. Das zweite Getriebe 106 ist zwischen dem Antriebsmotor 102 und dem zweiten Abtrieb 114 wirksam. Der Antriebsmotor 102 ist zentral zwischen dem ersten Getriebe 104 und dem zweiten Getriebe 106 angeordnet. Das erste Getriebe 104 und das zweite Getriebe 106 sind zum Antriebsmotor 102 spiegelsymmetrisch angeordnet und mithilfe der Koppelung 108 miteinander zur Drehmomentabstützung und zum Drehzahlausgleich gekoppelt.

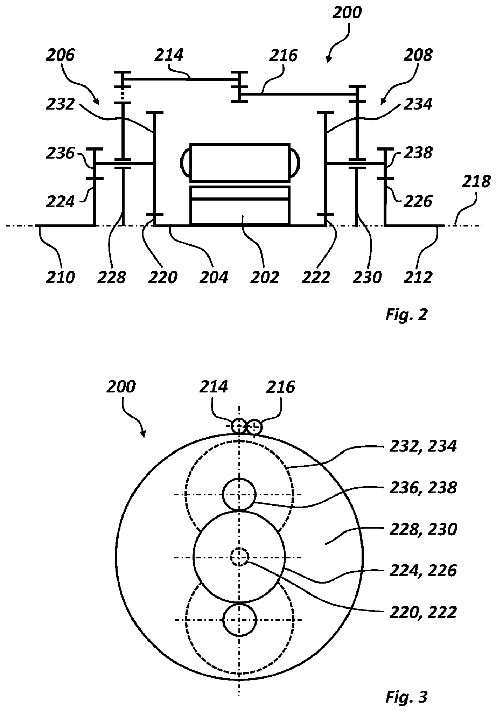

Fig. 2 zeigt eine integrierte Antriebsvorrichtung 200, wie Antriebsvorrichtung 100 gemäß Fig. 1, mit einem als elektrische Maschine ausgeführten Antriebsmotor 202 mit einer Motorwelle 204, zwei als Stirnradplanetengetriebe ausgeführten Getrieben 206, 208, einem mithilfe einer Ausgangswelle gebildeten ersten Abtrieb 210, einem mithilfe einer Ausgangswelle gebildeten zweiten Abtrieb 212 und einer mithilfe von zwei als Koppelwellen ausgeführten Koppelelementen 214, 216 gebildeten Koppelung im Halbschnitt entlang einer Hauptachse 218. Fig. 3 zeigt die Antriebsvorrichtung 200 in seitlicher Ansicht.

Die Motorwelle 204 weist ein erstes Ende, das dem ersten Getriebe 206 zugeordnet ist, und ein zweites Ende, das dem zweiten Getriebe 208 zugeordnet ist, auf. Die Getriebe 206, 208 weisen jeweils gleiche Übersetzungen auf und sind zueinander spiegelsymmetrisch aufgebaut. Die Getriebe 206, 208 weisen jeweils ein motorseitiges erstes Sonnenrad 220, 222, ein ausgangsseitiges zweites Sonnenrad 224, 226 und zwischen dem ersten Sonnenrad 220, 222 und dem zweiten Sonnenrad 224, 226 wirksame, an einem Planetenträger 228, 230 angeordnete Planetenräder, wie 232, 234, 236, 238, auf. Das erste Sonnenrad 220 des ersten Getriebes 206 ist an dem ersten Ende der Motorwelle 204 angeordnet und mit dieser drehfest verbunden. Das erste Sonnenrad 222 des zweiten Getriebes 208 ist an dem zweiten Ende der Motorwelle 204 angeordnet und mit dieser drehfest verbunden. Das zweite Sonnenrad 224 des ersten Getriebes 206 ist an der ersten Ausgangswelle angeordnet und mit dieser drehfest verbunden. Das zweite Sonnenrad 226 des zweiten Getriebes 208 ist an der zweiten Ausgangswelle angeordnet und mit dieser drehfest verbunden. Die Getriebe 206, 208 weisen jeweils zwei dem ersten Sonnenrad 220, 222 zugeordnete erste Planetenräder 232, 234 und zwei dem zweiten Sonnenrad 224, 226 zugeordnete zweite Planetenräder 236, 238 auf. Ein erstes Planetenrad 232, 234 und ein zweites Planetenrad 236, 238 bilden jeweils ein miteinander drehfest verbundenes Planetenradpaar. Die Getriebe 206, 208 weisen jeweils zwei Planetenpaare auf. Ein erstes Sonnenrad 220, 222 und ein erstes Planetenrad 232, 234 bilden jeweils eine erste Übersetzung. Ein zweites Sonnenrad 224, 226 und ein zweites Planetenrad 236, 238 bilden jeweils eine zweite Übersetzung. Die Planetenträger 228, 230 weisen jeweils eine Verzahnung 240, 242 zum Koppeln der Getriebe 206, 208 miteinander auf.

Der Planetenträger 228 des ersten Getriebes 206 und der Planetenträger 230 des zweiten Getriebes 208 sind mithilfe der Koppelelemente 214, 216 miteinander gekoppelt, um zwischen dem ersten Abtrieb 210 und dem zweiten Abtrieb 212 Drehmoment abzustützen sowie eine Drehzahldifferenz zu ermöglichen. Das erste Koppelelement 214 ist mit dem Planetenträger 228 des ersten Getriebes 206 und mit dem zweiten Koppelelement 216 zahnradverbunden. In Fig. 2 ist das erste Koppelelement 214 ausgestellt dargestellt, um die Verzahnung zwischen den Koppelelementen 214, 216 zu zeigen. Das zweite Koppelelement 216 ist mit dem ersten Koppelelement 214 und mit dem Planetenträger 230 des zweiten Getriebes 208 zahnradverbunden. Damit ergibt sich für die Koppelung zwischen dem ersten Getriebe 206 und dem zweiten Getriebe 208 eine Drehrichtungsumkehr. Das erste Getriebe 206 und das zweite Getriebe 208 sind miteinander ohne betragsmäßige Übersetzungsänderung mit einer Übersetzung i=-1 gekoppelt.

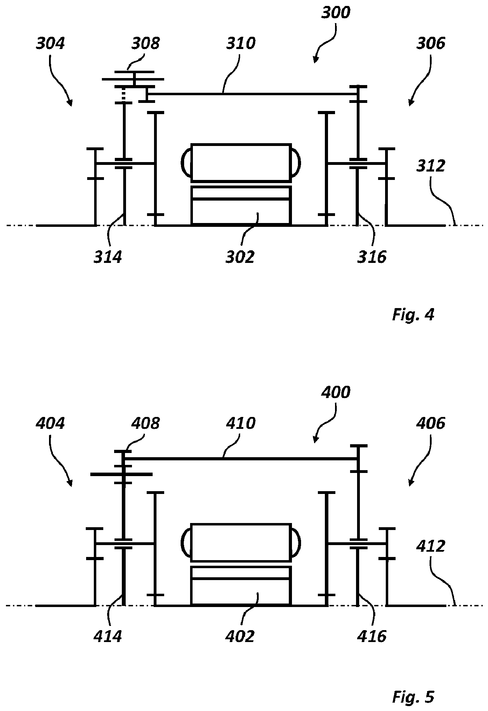

Fig. 4 zeigt eine integrierte Antriebsvorrichtung 300, wie Antriebsvorrichtung 100 gemäß Fig. 1, mit einem als Elektromotor ausgeführten Antriebsmotor 302, zwei als Stirnradplanetengetriebe ausgeführten Getrieben 304, 306 und einer Koppelung, die mithilfe eines als breites Rücklaufrad ausgeführten Koppelelements 308 und eines als lange Koppelwelle ausgeführten Koppelelements 310 gebildet ist, im Halbschnitt entlang einer Hauptachse 312. Das Koppelelement 308 weist eine breite Verzahnung auf, die sowohl mit einer Verzahnung des Koppelelements 310 als auch mit einer Verzahnung des Planetenträgers 316 des ersten Getriebes 304 in Eingriff steht. Das Koppelelement 310 erstreckt sich zwischen den Getrieben 304, 306 und ist mit dem Planetenträger 314 des zweiten Getriebes 306 zahnradverbunden. Im Übrigen wird ergänzend insbesondere auf Fig. 2 und Fig. 3 sowie die zugehörige Beschreibung verwiesen.

Fig. 5 zeigt eine integrierte Antriebsvorrichtung 400 mit einem als Elektromotor ausgeführten Antriebsmotor 402, zwei als Stirnradplanetengetriebe ausgeführten Getrieben 404, 406 und einer Koppelung, die mithilfe eines als kurzes Rücklaufrad ausgeführten Koppelelements 408 und eines als lange Koppelwelle ausgeführten Koppelelements 410 gebildet ist, im Halbschnitt entlang einer Hauptachse 412. Das Koppelelement 408 ist sowohl mit dem Planetenträger 416 des ersten Getriebes 404 als auch mit dem Koppelelement 410 zahnradverbunden. Das Koppelelement 410 erstreckt sich zwischen den Getrieben 404, 406 und ist mit dem Planetenträger 414 des zweiten Getriebes 406 zahnradverbunden. Im Übrigen wird ergänzend insbesondere auf Fig. 2 und Fig. 3 sowie die zugehörige Beschreibung verwiesen.

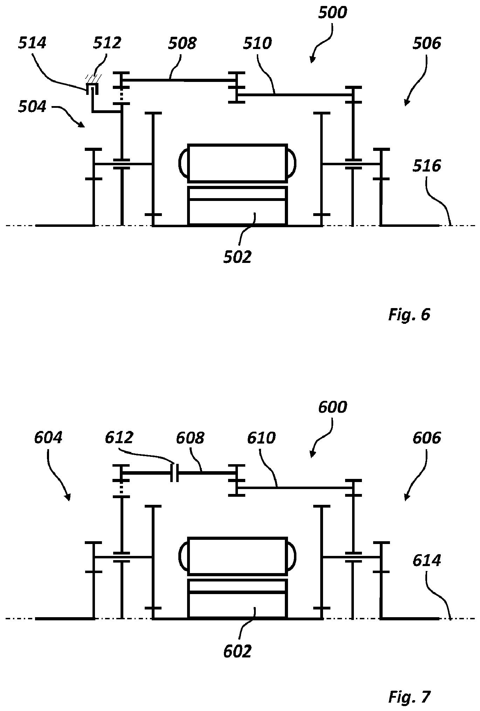

Fig. 6 zeigt eine integrierte Antriebsvorrichtung 500 mit einem als Elektromotor ausgeführten Antriebsmotor 502, zwei als Stirnradplanetengetriebe ausgeführten Getrieben 504, 506, einer Koppelung, die mithilfe von zwei als Koppelwellen ausgeführten Koppelelementen 508, 510 gebildet ist, einen Gehäuse 512 und einer Bremse 514 im Halbschnitt entlang einer Hauptachse 516. Die Bremse 514 dient zum Bremsen des Planetenträgers 518 des ersten Getriebes 504 gegen das Gehäuse 512, um eine Drehzahldifferenz zwischen der ersten Ausgangswelle und der zweiten Ausgangswelle zu reduzieren und/oder einen Drehzahlausgleich zu sperren. Im Übrigen wird ergänzend insbesondere auf Fig. 2 und Fig. 3 sowie die zugehörige Beschreibung verwiesen.

Fig. 7 zeigt eine integrierte Antriebsvorrichtung 600 mit einem als Elektromotor ausgeführten Antriebsmotor 602, zwei als Stirnradplanetengetriebe ausgeführten Getrieben 604, 606, einer Koppelung, die mithilfe von zwei als Koppelwellen ausgeführten Koppelelementen 608, 610 gebildet ist, und einem als Trennkupplung ausgeführten Schaltelement 612 im Halbschnitt entlang einer Hauptachse 614. Das Schaltelement 612 ist an dem Koppelelement 608 angeordnet und zwischen einer geschlossenen Schaltstellung und einer geöffneten Schaltstellung schaltbar. Damit ist die Koppelung zwischen dem ersten Getriebe 604 und dem zweiten Getriebe trennbar. Im Übrigen wird ergänzend insbesondere auf Fig. 2 und Fig. 3 sowie die zugehörige Beschreibung verwiesen.

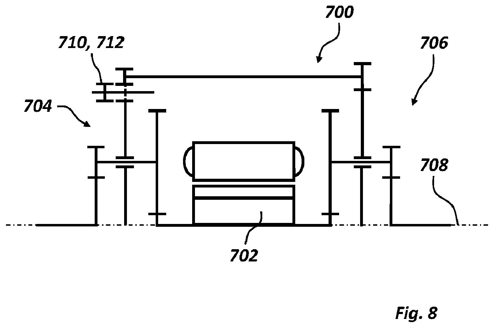

Fig. 8 zeigt eine integrierte Antriebsvorrichtung 700 mit einem als Elektromotor ausgeführten Antriebsmotor 702, zwei als Stirnradplanetengetriebe ausgeführten Getrieben 704, 706, einer Koppelung und einem axial verschiebbaren Rücklaufrad im Halbschnitt entlang einer Hauptachse 708. Das Rücklaufrad dient sowohl als Koppelelement 710 als auch als Schaltelement 712. Im Übrigen wird ergänzend insbesondere auf Fig. 2, Fig. 3 und Fig. 5 sowie die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Antriebsvorrichtung
- 102: Antriebsmotor
- 104: Getriebe
- 106: Getriebe
- 108: Koppelung
- 110: Gehäuse
- 112: Abtrieb
- 114: Abtrieb
- 116: Energie

- 200: Antriebsvorrichtung
- 202: Antriebsmotor
- 204: Motorwelle
- 206: Getriebe
- 208: Getriebe
- 210: Abtrieb
- 212: Abtrieb
- 214: Koppelelement
- 216: Koppelelement
- 218: Hauptachse
- 220: erstes Sonnenrad
- 222: erstes Sonnenrad
- 224: zweites Sonnenrad
- 226: zweites Sonnenrad
- 228: Planetenträger
- 230: Planetenträger
- 232: erstes Planetenrad
- 234: erstes Planetenrad
- 236: zweites Planetenrad
- 238: zweites Planetenrad
- 300: Antriebsvorrichtung
- 302: Antriebsmotor
- 304: Getriebe
- 306: Getriebe
- 308: Koppelelement
- 310: Koppelelement
- 312: Hauptachse
- 314: Planetenträger
- 316: Planetenträger

- 400: Antriebsvorrichtung
- 402: Antriebsmotor
- 404: Getriebe
- 406: Getriebe
- 408: Koppelelement
- 410: Koppelelement
- 412: Hauptachse
- 414: Planetenträger
- 416: Planetenträger

- 500: Antriebsvorrichtung
- 502: Antriebsmotor
- 504: Getriebe
- 506: Getriebe
- 508: Koppelelement
- 510: Koppelelement
- 512: Gehäuse
- 514: Bremse
- 516: Hauptachse
- 518: Planetenträger

- 600: Antriebsvorrichtung
- 602: Antriebsmotor
- 604: Getriebe
- 606: Getriebe
- 608: Koppelelement
- 610: Koppelelement
- 612: Schaltelement
- 614: Hauptachse

- 700: Antriebsvorrichtung
- 702: Antriebsmotor
- 704: Getriebe
- 706: Getriebe
- 708: Hauptachse
- 710: Koppelelement
- 712: Schaltelement

## Patentansprüche

1. Antriebsvorrichtung (100, 200, 300, 400, 500, 600, 700) für ein Kraftfahrzeug, die Antriebsvorrichtung (100, 200, 300, 400, 500, 600, 700) aufweisend einen Antriebsmotor (102, 202, 302, 402, 502, 602, 702), einen ersten Abtrieb (112), einen zweiten Abtrieb (114), ein leistungsverzweigendes erstes Getriebe (104, 206, 304, 404, 504, 604, 704) mit einem dem Antriebsmotor (102, 202, 302, 402, 502, 602, 702) zugeordneten Getriebeeingang, einem dem ersten Abtrieb (112) zugeordneten Getriebeausgang und einer Koppelschnittstelle und ein leistungsverzweigendes zweites Getriebe (106, 208, 306, 406, 506, 606, 706) mit einem dem Antriebsmotor (102, 202, 302, 402, 502, 602, 702) zugeordneten Getriebeeingang, einem dem zweiten Abtrieb (114) zugeordneten Getriebeausgang und einer Koppelschnittstelle, wobei die Koppelschnittstelle des ersten Getriebes (104, 206, 304, 404, 504, 604, 704) und die Koppelschnittstelle des zweiten Getriebes (106, 208, 306, 406, 506, 606, 706) miteinander zum Drehzahlausgleich gekoppelt sind.

2. Antriebsvorrichtung (100, 200, 300, 400, 500, 600, 700) nach Anspruch 1, **dadurch gekennzeichnet, dass** der Antriebsmotor (102, 202, 302, 402, 502, 602, 702) zentral angeordnet ist und das erste Getriebe (104, 206, 304, 404, 504, 604, 704) und das zweite Getriebe (106, 208, 306, 406, 506, 606, 706) zum Antriebsmotor (102, 202, 302, 402, 502, 602, 702) spiegelsymmetrisch angeordnet sind.

3. Antriebsvorrichtung (100, 200, 300, 400, 500, 600, 700) nach wenigstens einem der vorhergehenden Ansprüche, **dadurch gekennzeichnet, dass** das erste Getriebe (104, 206, 304, 404, 504, 604, 704) und das zweite Getriebe (106, 208, 306, 406, 506, 606, 706) gleiche Übersetzungen aufweisen.

4. Antriebsvorrichtung (100, 200, 300, 400, 500, 600, 700) nach wenigstens einem der vorhergehenden Ansprüche, **dadurch gekennzeichnet, dass** das der Getriebeeingang des ersten Getriebes (104, 206, 304, 404, 504, 604, 704) und der Getriebeeingang des zweiten Getriebes (106, 208, 306, 406, 506, 606, 706) jeweils mithilfe eines motorseitigen ersten Sonnenrads (220, 222), der Getriebeausgang des ersten Getriebes (104, 206, 304, 404, 504, 604, 704) und der Getriebeausgang des zweiten Getriebes (106, 208, 306, 406, 506, 606, 706) jeweils mithilfe eines ausgangsseitigen zweiten Sonnenrads (224, 226) und die Koppelschnittstelle des ersten Getriebes (104, 206, 304, 404, 504, 604, 704) und die Koppelschnittstelle des zweiten Getriebes (106, 208, 306, 406, 506, 606, 706) jeweils mithilfe eines Planetenträgers (228, 230), an dem zwischen dem ersten Sonnenrad (220, 222) und dem zweiten Sonnenrad (224, 226) wirksame Planetenräderpaare (232, 236; 234, 238) angeordnet sind, gebildet ist.

5. Antriebsvorrichtung (100, 200, 300, 400, 500, 600, 700) nach wenigstens einem der vorhergehenden Ansprüche, **dadurch gekennzeichnet, dass** die Koppelschnittstelle des ersten Getriebes (104, 206, 304, 404, 504, 604, 704) und die Koppelschnittstelle des zweiten Getriebes (106, 208, 306, 406, 506, 606, 706) miteinander drehrichtungsumkehrend gekoppelt sind.

6. Antriebsvorrichtung (100, 200, 300, 400, 500, 600, 700) nach wenigstens einem der vorhergehenden Ansprüche, **dadurch gekennzeichnet, dass** die Koppelschnittstelle des ersten Getriebes (104, 206, 304, 404, 504, 604, 704) und die Koppelschnittstelle des zweiten Getriebes (106, 208, 306, 406, 506, 606, 706) miteinander mithilfe eines ersten Koppelelements (214, 308, 408, 508, 608, 710) und eines zweiten Koppelelements (216, 310, 410, 510, 610) gekoppelt sind, wobei das erste Koppelelement (214, 308, 408, 508, 608, 710) zwischen dem ersten Getriebe (104, 206, 304, 404, 504, 604, 704) und dem zweiten Koppelelement (216, 310, 410, 510, 610) und das zweite Koppelelement (216, 310, 410, 510, 610) zwischen dem ersten Koppelelement (214, 308, 408, 508, 608, 710) und dem zweiten Getriebe (106, 208, 306, 406, 506, 606, 706) wirksam ist.

7. Antriebsvorrichtung (100, 200, 300, 400, 500, 600, 700) nach wenigstens einem der vorhergehenden Ansprüche, **dadurch gekennzeichnet, dass** das erste Koppelelement (214, 308, 408, 508, 608, 710) und/oder das zweite Koppelelement (216, 310, 410, 510, 610) als Koppelwelle, Zahnrad oder Kette ausgeführt sind/ist.

8. Antriebsvorrichtung (500) nach wenigstens einem der vorhergehenden Ansprüche, **dadurch gekennzeichnet, dass** das erste Getriebe (504), das zweite Getriebe (506) und/oder wenigstens ein Koppelelement (508, 510) eine Bremse (514) aufweist.

9. Antriebsvorrichtung (600) nach wenigstens einem der vorhergehenden Ansprüche, **dadurch gekennzeichnet, dass** die Koppelung zwischen dem ersten Getriebe (604) und dem zweiten Getriebe (606) trennbar ist.

10. Kraftfahrzeug, **dadurch gekennzeichnet, dass** das Kraftfahrzeug eine Antriebsvorrichtung (100, 200, 300, 400, 500, 600, 700) nach wenigstens einem der vorhergehenden Ansprüche aufweist.
